# EUROPEAN PATENT APPLICATION

(11) **EP 2 617 740 A1**
(43) Date of publication of application: **24.07.2013**
(21) Application number: 11824730.3
(22) Date of filing: 01.09.2011
(51) Int. Cl.: C08F 10/00, C07F 7/00, C07F 7/08, C07F 17/00, C08F 4/6592

(54) **HIGHLY VISCOUS HIGHER ALPHAOLEFIN POLYMER AND METHOD FOR PRODUCING SAME**

(30) Priority: 13.01.2011 JP 2011004563; 16.09.2010 JP 2010207811
(71) Applicant: Idemitsu Kosan Co., Ltd., Chiyoda-ku Tokyo 100-8321 (JP)
(72) Inventor: FUJIMURA, Takenori, Ichihara-shi Chiba 299-0193 (JP); TSUJI, Minako, Ichihara-shi Chiba 299-0193 (JP); OKAMOTO, Takuji, Ichihara-shi Chiba 299-0193 (JP); MINAMI, Yutaka, Ichihara-shi Chiba 299-0193 (JP)
(74) Representative: Vossius & Partner
(86) International application number: PCT/JP2011/004899
(87) International publication number: WO 2012/035710

(57) **Abstract**

An α-olefin polymer has (A) a tacticity index(meso triad fraction)[mm] of 10 to 50 mol%, (B) a kinematic viscosity at 100°C of 200 to 10,000 mm²/s, (C) a content of a dimer and a trimer is less than 2 mass%, and (D) an average number of carbon atoms of 4 to 30.

## Description

### TECHNICAL FIELD

The Invention relates to a novel α-olefin polymer that may suitably be used as a lubricant base stock, an additive, and a functional wax, and a method for producing the same.

### BACKGROUND ART

A higher α-olefin polymer (poly-α-olefin (PAO)) has been mainly produced by batch polymerization. The properties of a PAO are affected by the chain length of the raw material olefin, and a PAO has been produced using 1-octene, 1-decene, or 1-dodecene as the main raw material (see Patent Documents 1 and 2, for example).

A different viscosity level is required for a PAO depending on the application and the like, and a catalyst such as BF₃, AlCl₃, or cobalt oxide is used to control the viscosity of a PAO. A PAO obtained using BF₃ or AlCl₃ is a low-viscosity lubricant that has a low molecular weight. It is necessary to decrease the reaction temperature in order to synthesize a high-viscosity PAO, and a decrease in productivity may occur as a result of decreasing the reaction temperature.

An α-olefin polymer having low tacticity tends to have a low molecular weight and low viscosity, and an α-olefin polymer having high tacticity tends to have a high molecular weight and high viscosity. When producing a polymer using a metallocene complex, a polymer having a low molecular weight is produced when the reaction temperature is high, and a polymer having a high molecular weight is produced when the reaction temperature is low.
For example, Non-patent Document 1 describes that the molecular weight of a polymer decreases as the reaction temperature increases when using a racemic metallocene complex, and the resulting polymer has high tacticity.
Patent Document 3 discloses an α-olefin polymer production example in which an α-olefin is reacted at 65°C using a meso metallocene complex. In the production example disclosed in Patent Document 3, a polymer having high viscosity is not obtained in spite of the relatively low reaction temperature.

Patent Document 4 discloses that polypropylene having medium or low tacticity and a high molecular weight can be produced. However, Patent Document 4 is silent about polymerization of an α-olefin having 4 or more carbon atoms. Since propylene and an α-olefin having 4 or more carbon atoms differ in reactivity, an α-olefin having 4 or more carbon atoms may not be polymerized even though polypropylene can be produced.

Patent Document 5 discloses a method that produces a PAO using a common metallocene complex. Patent Document 5 discloses an example in which α-olefin is reacted at a relatively high reaction temperature (100°C) to produce a PAO having viscosity similar to that of a PAO obtained using BF₃ or AlCl₃. Note that the polymer produced in Patent Document 3 is characterized in that the polymer is terminated by a 2,1-bond. Since it Is difficult to produce a high-viscosity polymer at a high temperature (i.e., a polymer is necessarily produced at a low temperature), a decrease in productivity occurs. Since methylaluminoxane (MAO) is used as a promoter, the amount of catalyst residue may increase, and the deashing step may be adversely affected. Since the polymer contains an unsaturated bond, it is necessary to perform a hydrogenation step, and the production cost increases due to the deashing step and the hydrogenation step.

Patent Document 6 discloses that a high-viscosity polymer can be obtained. However, the polymer disclosed in Patent Document 6 has high tacticity(syndiotacticity). In Patent Document 6, the monomer is reacted at a low temperature in order to produce a high-viscosity polymer (i.e., it is difficult to produce a high-viscosity polymer at a high temperature).

Patent Document 7 discloses that a high-viscosity polymer can be obtained. However, Patent Document 7 is silent about the terminal (end) of the polymer and the like, and it is considered that the polymer contains an unsaturated bond since hydrogen is not introduced into the reaction system. Since ethylene is introduced into the reaction system, the polymer contains an ethylene chain. In Patent Document 7, the monomer is reacted at a low temperature in order to produce a high-viscosity polymer (i.e., it is difficult to produce a high-viscosity polymer at a high temperature).

### RELATED-ART DOCUMENT

### PATENT DOCUMENT

Patent Document 1: United States Patent No. 3,149,178
Patent Document 2: United States Patent No. 3,382,291
Patent Document 3: JP-A-2001-335607
Patent Document 4: JP-A-8-259583
Patent Document 5: JP-A-2009-501836
Patent Document 6: JP-A-2005-200448
Patent Document 7: JP-A-2005-200447

### NON-PATENT DOCUMENT

Non-patent Document 1: Journal of Polymer Science Part A Vol. 38, 2333-2339 (2000)

### SUMMARY OF THE INVENTION

An object of the invention is to provide a method for producing a PAO that can produce a high-viscosity PAO by hlgh-temperature polymerization, and achieve high productivity.

The inventors of the invention conducted extensive studies, and found that an α-olefin polymer that has low tacticity, high viscosity, and a controlled compositional distribution can be obtained at a high reaction temperature by utilizing a catalyst that includes a specific transition metal compound. The inventors also found that an α-olefin polymer produced using the catalyst may suitably be used as a lubricant base stock, an additive, and the like. These findings have led to the completion of the invention.

Several aspects of the invention provide the following α-olefin polymer and the like.
1. An α-olefin polymer having (A) a meso triad fraction (mm) of 10 to 50 mol%. (B) a kinematic viscosity at 100°C of 200 to 10,000 mm²/s, (C) a content of a dimer and a trimer is less than 2 mass%, and (D) an average number of carbon atoms of 4 to 30.
2. The α-olefin polymer according to 1, the α-olefin polymer being amorphous, and having (E) a pour point of -15°C or less, (F) a viscosity index of 150 or more, and (G) an average number of carbon atoms of 4 to 15.
3. The α-olefin polymer according to 1, the α-olefin polymer being crystalline, and having (H) one melting peak at 20 to 100°C when the α-olefin polymer is subjected to measurement of a melting point (Tm) using a differential scanning calorimeter (DSC), a melting endothermic amount (ΔH) calculated from an area of the melting peak being 20 J/g or more, and a half-width being 10°C or less, and (I) an average number of carbon atoms of 16 to 30.
4. A meso transition metal compound represented by a formula (I), 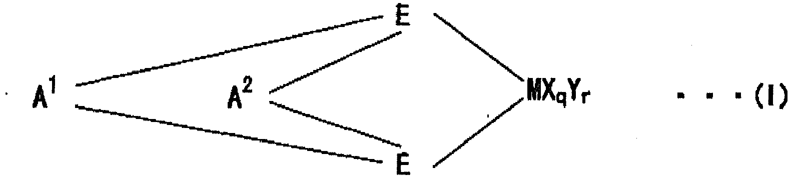 wherein M is a metal element among the elements in Groups 3 to 10 In the periodic table, X is a σ-bonding ligand, provided that a plurality of X may be either identical or different when a plurality of X are present, Y is a Lewis base, provided that a plurality of Y may be either identical or different when a plurality of Y are present, A¹ and A² are respectively a bridging group represented by a formula (IIa) and a bridging group represented by a formula (IIb), provided that A¹ and A² are different groups. 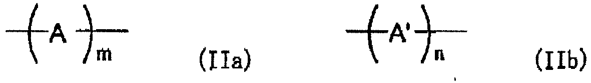 wherein A and A' are independently groups selected from a hydrocarbon group having 1 to 20 carbon atoms, a halogen-containing hydrocarbon group having 1 to 20 carbon atoms, a silicon-containing group, a germanium-containing group, and a tin-containing group, and may be substituted with a substituent, and m and n are integers equal to or larger than 2,
   q is an integer from 1 to 5 that indicates "(valence of M) - 2", r is an integer from 0 to 3, and E are groups represented by a formula (IIc), and the two Es may be either identical or different, 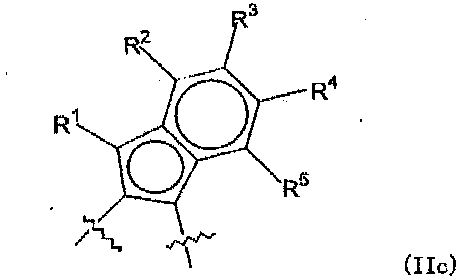 wherein R¹ to R⁶ are independently a hydrogen atom, a halogen atom, a hydrocarbon group having 1 to 20 carbon atoms, a halogen-containing hydrocarbon group having 1 to 4 carbon atoms, a silicon-containing group, or a heteroatom-containing group, provided that a wavy line indicates a bonding with the bridging groups A¹ and A².
5. The transition metal compound according to 4, wherein A and A' of the formulas (IIa) and (IIb) are respectively a group represented by a formula (IIIa) and a group represented by a formula (IIIb), 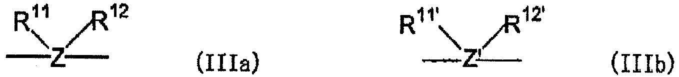 wherein Z and Z' are independently a carbon atom, a silicon atom, a germanium atom, or a tin atom, and R¹¹, R¹², R^{11'}, and R^{12'} are independently a hydrogen atom, an aliphatic hydrocarbon group, an aromatic hydrocarbon group, a nitrogen-containing group, a silicon-containing group, or a halogen-containing group.
6. A polymerization catalyst including:
   (A) the transition metal compound according to 4 or 5;
   (B) at least one compound selected from (B-1) a compound that can react with the transition metal compound (A) or a derivative thereof to form an ionic complex, and (B-2) an aluminoxane; and
   (C) an organoaluminum compound.
7. The polymerization catalyst according to 6, wherein the aluminoxane (B-2) is a compound represented by a formula (VII) or a compound represented by a formula (VIII), 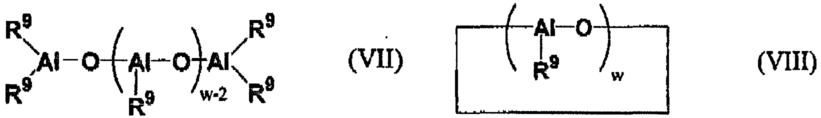 wherein R⁹ is a hydrocarbon group having 1 to 20 carbon atoms or a halogen atom, and w indicates an average degree of polymerization, provided that a plurality of R⁹ may be either identical or different.
8. A method for producing the α-olefin polymer according to 1, the method including polymerizing an α-olefin using the polymerization catalyst according to 6 or 7.
9. The method according to 8, wherein a polymerization catalyst obtained by bringing the transition metal compound (A), the compound (B), and the organoaluminum compound (C) into contact with each other in advance is used as the polymerization catalyst.
10. The method according to 6, wherein a polymerization catalyst obtained by bringing the transition metal compound (A), the compound (B), the organoaluminum compound (C), and an α-olefin having 3 to 18 carbon atoms into contact with each other in advance is used as the polymerization catalyst.
11. The method according to any one of 8 to 10, wherein the α-olefin is polymerized at 80 to 200°C
12. The method according to any one of 8 to 11, wherein the α-olefin is polymerized at a hydrogen pressure of normal pressure to 10 MPa (G).
13. The α-olefin polymer according to 1, the α-olefin polymer being obtained by the method according to any one of 8 to 12.

A high-viscosity α-olefin polymer can be obtained at a high polymerization temperature by utilizing the transition metal compound according to the invention as a catalyst component.
Since the viscosity inside the reactor decreases due to a high polymerization temperature even if a high-viscosity polymer is produced, fluidity and the heat removal efficiency are improved. Therefore, productivity is expected to be improved. Since the complex according to the invention can reduce the amount of unsaturated bond in the polymer, load due to a hydrogenation step can be reduced.
It is also possible to reduce the amount of catalyst residue. Since a polymer having a saturated structure is obtained by introducing hydrogen during polymerization, it may be possible to omit a hydrogenation step. This may make it possible to further reduce cost.
The α-olefin polymer according to the invention has low tacticity and a low dimer/trimer content.

### DESCRIPTION OF EMBODIMENTS

An α-olefin polymer according to the invention has (A) a meso triad fraction (mm) of 10 to 50 mol%, (B) a kinematic viscosity at 100°C of 200 to 10,000 mm²/s, (C) a content of a dimer and a trimer of less than 2 mass%, and (D) an average number of carbon atoms of 4 to 30.
Each requirement is described below.

### (A) Tacticity index (Meso triad fraction) [mm)

The α-olefin polymer according to the invention has a tacticity index (meso triad fraction)[mm] of 10 to 50 mol%. The tacticity index (meso triad fraction) [mm] of the α-olefin polymer is preferably 25 to 50 mol%, and more preferably 30 to 40 mol%. If the tacticity index (meso triad fraction) [mm] of the α-olefin polymer exceeds 50 mol%, the α-olefin polymer may exhibit inferior low-temperature properties. The α-olefin polymer exhibits excellent low-temperature properties when the tacticity index (meso triad fraction) [mm] of the α-olefin polymer is 10 mol% or more,
The tacticity index (meso triad fraction) [mm] may be determined by ¹³C-NMR spectroscopy.
The tacticity Index (meso triad fraction) [mm] may be controlled by appropriately selecting the polymerization catalyst, the polymerization temperature, the polymerization pressure, the monomer concentration, and the like.

### (B) Kinematic viscosity at 100°C

The α-olefin polymer according to the invention has a kinematic viscosity at 100°C measured in accordance with JIS K 2283 of 200 to 10,000 mm²/s. It is preferable to appropriately adjust the kinematic viscosity at 100°C of the α-olefin polymer depending on the application.
For example, the kinematic viscosity at 100°C of the α-olefin polymer is preferably 500 to 2000 mm²/s when the α-olefin polymer is used as a lubricant. When the kinematic viscosity at 100°C of the α-olefin polymer Is 500 mm²/s or more, the α-olefin polymer exhibits sufficient durability and the like when used as a lubricant component. When the kinematic viscosity at 100°C of the α-olefin polymer is 2000 mm²/s or less, the α-olefin polymer exhibits a sufficient energy-saving capability and the like.
The kinematic viscosity at 100°C of the α-olefin polymer is preferably 2000 to 10,000 mm²/s, when the α-olefin polymer is used as a lubricant additive. When the kinematic viscosity at 100°C of the α-olefin polymer is 2000 mm²/s or more, the α-olefin polymer exhibits a sufficient effect (i.e., an improvement in viscosity index) when added to a lubricant If the kinematic viscosity at 100°C of the α-olefin polymer exceeds 10,000 mm²/s, workability may deteriorate due to poor fluidity.
The kinematic viscosity at 100°C of the α-olefin polymer is preferably 200 to 10,000 mm²/s, more preferably 260 to 5,000 mm²/s, when the α-olefin polymer is used as a functional wax. If the kinematic viscosity at 100°C of the α-olefin polymer is less than 200 mm²/s, tackiness and the like may occur. If the kinematic viscosity at 100°C of the α-olefin polymer exceeds 10,000 mm²/s, workability may deteriorate since a decrease in solubility occurs due to too high a viscosity.

The kinematic viscosity at 100°C may be controlled by appropriately selecting the polymerization temperature, the hydrogen pressure, and the like.

### (C) Dimer/trimer content (compositional distribution)

The α-olefin polymer according to the invention has a dimer/trimer content of less than 2 mass%. The dimer/trimer content in the α-olefin polymer is preferably less than 1.9 mass%. When the dimer/trimer content in the α-olefin polymer is within the above range, the α-olefin polymer according to the invention has a low dimer/trimer content, a small molecular weight distribution value, and an almost uniform composition. Therefore, a polymer having the desired viscosity can be obtained. Since the α-olefin polymer includes only a small amount of a component that may cause a deterioration in performance, the α-olefin polymer may be useful as a wax or a lubricant component.
When the dimer/trimer content is 2 mass% or more, a large amount of dimer/trimer components have been produced. In this case, a polymer suitable for the intended application may not be obtained even if the polymer is purified after production. Moreover, a decrease in productivity, and an increase in environmental impact due to an increase in the amount of waste may occur.

The dimer/trimer content may be determined by gas chromatography (GC).
The dimer/trimer content may be controlled by appropriately selecting the polymerization catalyst, the polymerization temperature, the hydrogen pressure, the catalyst component, and the like.

### (D) Average number of carbon atoms

The α-olefin polymer according to the invention is produced using α-olefins having an average number of carbon atoms of 4 to 30 as a raw material For example, the average number of carbon atoms is preferably 4 to 15, and particularly preferably 6 to 12, when the α-olefin polymer is used as in lubricant applications. The average number of carbon atoms is preferably 16 to 30, and particularly preferably 18 to 28, when the α-olefin polymer is used as a functional wax. If the average number of carbon atoms Is less than 4, the resulting polymer has properties similar to those of polyethylene and polypropylene (i.e., a liquid polymer may not be obtained). Therefore, it may be difficult to use the resulting polymer in lubricant applications. If the average number of carbon atoms exceeds 30, workability may deteriorate since the monomer is solid.
It is preferable that content of α-olefin units having 4 or more carbon atoms be 100 mol%.

The average number of carbon atoms may be determined by NMR spectroscopy. When subjecting an α-olefin to ¹H-NMR spectroscopy the peak of a proton attributed to -CH₂- and -CH- is observed at about 1.2 ppm, and the peak of a proton attributed to -CH₃ is observed at about 0.9 ppm. The average number of carbon atoms can be calculated from the number of protons calculated from the peak integral value.
A: Integral value at 0.9 ppm
B: Integral value at 1.2 ppm
The number of side-chain carbon atoms can be calculated by "[{integral value ratio (B/A) × 3} - 3]/2". The average number of carbon atoms is calculated by "number of side-chain carbon atoms + 3".
When the raw material monomers used for polymerization and the ratio of the raw material monomers are known, the average number of carbon atoms may be calculated from the raw material monomers used for polymerization and the ratio of the raw material monomers. The same result as that determined by NMR spectroscopy can also be obtained by this method.
The average number of carbon atoms may be controlled by appropriately adjusting the amount and the number of carbon atoms of the α-olefin used as the raw material. For example, when using an α-olefin having 16 or more carbon atoms, the average number of carbon atoms can be adjusted to 5 to 24 by copolymerizing the α-olefin having 16 or more carbon atoms with an α-olefin having 4 to 12 carbon atoms.

It may be preferable that the α-olefin polymer according to the invention be amorphous, and have (E) a pour point of -15°C or less, (F) a viscosity index of 150 or more, and (G) an average number of carbon atoms of 4 to 15.
An α-olefin polymer that satisfies the above requirements is preferable for lubricant applications.
Note that the term "amorphous" used herein means that the α-olefin polymer has properties (e.g., the absence of a melting point, the presence of only a glass transition temperature, transparency, and a small change in volume during solidification under cooling) that are normally observed when the α-olefin polymer is amorphous.
Each requirement is described below.

### (E) Pour point

It may be preferable that the α-olefin polymer according to the invention have a pour point of -15°C or less. The pour point of the α-olefin polymer Is more preferably -20°C or less, and particularly preferably -30°C or less. It is preferable that the pour point of the α-olefin polymer be as low as possible. If the pour point of the α-olefin polymer is above -15°C, the low-temperature properties of the α-olefin polymer may deteriorate.
The pour point is measured in accordance with JIS K 2269.
The pour point may be controlled by appropriately selecting the average number of carbon atoms, the polymerization temperature, and the like.

### (F) Viscosity index (VI)

It may be preferable that the α-olefin polymer according to the invention have a viscosity index of 150 or more, and more preferably 170 or more. It is preferable that the viscosity index of the α-olefin polymer be as large as possible. If the viscosity index of the α-olefin polymer is less than 150, cold startability may deteriorate. The temperature dependence decreases as the viscosity index increases. This is advantageous for a lubricant.
The viscosity index is calculated from the kinematic viscosity in accordance with JIS K 2283.
The viscosity index that is calculated from the kinematic viscosity may be controlled by controlling the kinematic viscosity.

### (G) Average number of carbon atoms

It may be preferable that the α-olefin polymer according to the invention have an average number of carbon atoms of 4 to 15, and particularly preferably 6 to 12. The above range is suitable for lubricant applications.

It is also preferable that the α-olefin polymer according to the invention be crystalline, and have (H) one melting peak at 20 to 100°C when the α-olefin polymer is subjected to measurement of a melting point (Tm) using a differential scanning calorimeter (DSC), a melting endothermio amount (ΔH) calculated from an area of the melting peak being 20 J/g or more, and a half-width being 10°C or less, and (I) an average number of carbon atoms of 16 to 30.
An α-olefin polymer that satisfies the above requirements may be preferable for functional wax applications.
Note that the term "crystalline" used herein means that the α-olefin polymer has properties (e.g., the presence of a melting point and a glass transition temperature, low transparency, and a change in volume due to crystallization) that are normally observed when the α-olefin polymer is crystalline.
Each requirement is described below.

### (H) Melting peak, melting endothermic amount (ΔH), and half-width

The α-olefin polymer according to the invention may have one melting peak at 20 to 100°C when the α-olefin polymer is subjected to measurement of the melting point (Tm) using a differential scanning calorimeter (DSC). Specifically, one melting peak is observed during a temperature increase process for measuring the melting point. This means that absorption considered to be another peak or a shoulder is not observed. When the α-olefin polymer has one melting peak at 20 to 100°C, the α-olefin polymer melts sharply at the desired temperature.

The α-olefin polymer according to the invention may be configured so that the melting endothermic amount (ΔH) calculated from the area of the melting peak is 20 J/g or more, and the half-width is 10°C or less.
The melting endothermic amount (ΔH) is an index that indicates the degree of softness. The modulus of elasticity increases (i.e., the degree of softness decreases) as the melting endothermic amount (ΔH) increases. The melting endothermic amount (ΔH) is preferably 20 to 250 J/g, and more preferably 30 to 200 J/g. When the melting endothermic amount (ΔH) is 20 J/g or more, the α-olefin polymer is suitable for functional wax applications since the α-olefin polymer has a high modulus of elasticity and a low degree of softness.

The term "half-width" used herein refers to the peak width at the half height of the endothermic peak when measuring the melting point using a DSC. A small half-width indicates that a uniform crystal is formed. The half-width indicates the uniformity of the α-olefin polymer. The half-width is preferably 9.5°C or less, and more preferably 2 to 9°C. When the half-width is 10°C or less, the α-olefin polymer shows sharp melting behavior. For example, when using the α-olefin polymer as a main material for a temperature-sensitive pressure-sensitive adhesive, the extent of the adhesion/non-adhesion switch temperature region can be suppressed, and a rapid change in adhesion due to temperature can be implemented. Specifically, temperature sensitivity is improved.

The melting peak, the melting endothermic amount, and the half-width may be controlled by appropriately selecting the average number of carbon atoms, the polymerization temperature, the hydrogen pressure, and the like.

### (I) Average number of carbon atoms

It may be preferable that the α-olefin polymer according to the invention have an average number of carbon atoms of 16 to 30, and particularly preferably 18 to 28. The above range is suitable for functional wax applications. It is preferable that the average number of carbon atoms be 16 or more in order to obtain a polymer that shows a melting point

The α-olefin polymer according to the invention may be produced by polymerizing a raw material olefin.
A known α-olefin may be used as the raw material olefin. The α-olefin polymer may be produced by polymerizing only one type of raw material olefin, or may be produced by polymerizing a mixture of two or more types of raw material olefin. The amount of raw material olefin is adjusted so that the average number of carbon atoms is 4 to 30.
For example, when adjusting the average number of carbon atoms to 4 to 15 in order to use the α-olefin polymer in lubricant applications, an α-olefin having 4 to 15 carbon atoms may be polymerized, or the average number of carbon atoms may be adjusted by copolymerizing an α-olefin having 16 or more carbon atoms and an α-olefin having 12 or less carbon atoms.

Specific examples of a preferable α-olefin include 1-butene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 1-tetracosene, 1-hexacosene, 1-octacosene, 1-triacontene, and the like. An α-olefin polymer that may be useful as a wax component or a lubricant component is obtained by utilizing these raw material olefins. Note that an α-olefin other than the above α-olefins may also be used. For example, a branched olefin may be used.

The α-olefin polymer according to the invention is obtained by polymerizing the raw material olefin under conditions whereby the above requirements are satisfied. The raw material olefin is preferably polymerized using a catalyst that includes a transition metal compound according to the invention described below. This makes it possible to produce an α-olefin polymer that satisfies the above requirements.

The transition metal compound according to the invention is a meso transition metal compound represented by the following formula (I).

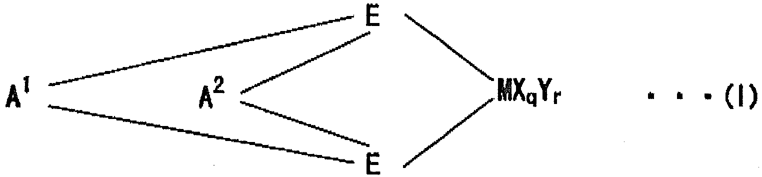

In the formula (I), M is a metal element among the elements in Groups 3 to 10 in the periodic table. Specific examples of the metal element represented by M include titanium, zirconium, hafnium, yttrium, vanadium, chromium, manganese, nickel, cobalt, palladium, lanthanoid series metals, and the like. Among these, the elements in Group 4 in the periodic table are preferable from the viewpoint of olefin polymerization activity and the like. Titanium, zirconium, and hafnium are more preferable, and zirconium is most preferable from the viewpoint of the yield of the terminal vinylidene group and catalytic activity.

X is a σ-bonding ligand. A plurality of X may be either identical or different when a plurality of X are present. X may be crosslinked with another X₁ E, or Y. Specific examples of the σ-bonding ligand represented by X include a halogen atom, a hydrocarbon group having 1 to 20 carbon atoms, an alkoxy group having 1 to 20 carbon atoms, an aryloxy group having 6 to 20 carbon atoms, an amide group having 1 to 20 carbon atoms, a silicon-containing group having 1 to 20 carbon atoms, a phosphide group having 1 to 20 carbon atoms, a sulfide group having 1 to 20 carbon atoms, an acyl group having 1 to 20 carbon atoms, and the like.

Examples of the halogen atom include a chlorine atom, a fluorine atom, a bromine atom, and an iodine atom.
Specific examples of the hydrocarbon group having 1 to 20 carbon atoms include alkyl groups such as a methyl group, an ethyl group, a propyl group, a butyl group, a hexyl group, a cyclohexyl group, and an octyl group; alkenyl groups such as a vinyl group, a propenyl group, and a cyclohexenyl group; arylalkyl groups such as a benzyl group, a phenylethyl group, and a phenylpropyl group; aryl groups such as a phenyl group, a tolyl group, a dimethylphenyl group, a trimethylphenyl group, an ethylphenyl group, a propylphenyl group, a biphenyl group, a naphthyl group, a methylnaphthyl group, an anthracenyl group, and a phenenthryl group; and the like. Among these, alkyl groups such as a methyl group, an ethyl group, and a propyl group; and aryl groups such as a phenyl group are preferable.

Examples of the alkoxy group having 1 to 20 carbon atoms include a methoxy group, an ethoxy group, a propoxy group, a butoxy group, and the like. Examples of the aryloxy group having 6 to 20 carbon atoms include a phenoxy group, a methylphenoxy group, a dimethylphenoxy group, and the like. Examples of the amide group having 1 to 20 carbon atoms include alkylamide groups such as a dimethylamide group, a diethylamide group, a dipropylamide group, a dibutylamide group, a dicyclohexylamide group, and a methylethylamide group; alkenylamide groups such as a divinylamide group, a dipropenylamide group, and a dicyclohexenylamide group; arylalkylamide groups such as a dibenzylamide group, a phenylethylamide group, and a phenylpropylamide group; and arylamide groups such as a diphenylamide group and a dinaphthylamide group.

Examples of the silicon-containing group having 1 to 20 carbon atoms Include hydrocarbon-monosubstituted silyl groups such as a methylsilyl group and a phenylsilyl group; hydrocarbon-disubstituted silyl groups such as a dimethylsilyl group and a diphenylsilyl group; hydrocarbon-trisubstituted silyl groups such as a trimethylsilyl group, a triethyisilyl group, a tripropylsilyl group, a tricyclohexylsilyl group, a triphenylsilyl group, a dimethylphenylsilyl group, a methyldiphenylsilyl group, a tritolylsilyl group, and a trinaphthylsilyl group; hydrocarbon-substituted silyl ether groups such as a trimethyl silyl ether group; silicon-substituted alkyl groups such as a trimethylsilylmethyl group; silicon-substituted aryl groups such as a trimethylsilylphenyl group; and the like. Among these, a trimethylsilylmethyl group, a phenyldimethylsilylethyl group, and the like are preferable.

Examples of the phosphide group having 1 to 20 carbon atoms include alkyl phosphide groups such as a dimethyl phosphide group, a diethyl phosphide group, a dipropyl phosphide group, a dibutyl phosphide group, a dicyclohexyl phosphide group, and a dioctyl phosphide group; alkenyl phosphide groups such as a divinyl phosphide group, a dipropenyl phosphide group, and a dicyclohexenyl phosphide group; arylalkyl phosphide groups such as a dibenzyl phosphide group and a bis(phenylethylphenyl) phosphide group; and aryl phosphide groups such as a diphenyl phosphide group, a ditolyl phosphide group, and a dinaphthyl phosphide group.

Examples of the sulfide group having 1 to 20 carbon atoms include alkyl sulfide groups such as a methyl sulfide group, an ethyl sulfide group, a propyl sulfide group, a butyl sulfide group, a hexyl sulfide group, a cyclohexyl sulfide group, and an octyl sulfide group; alkenyl sulfide groups such as a vinyl sulfide group, a propenyl sulfide group, and a cyclohexenyl sulfide group; arylalkyl sulfide groups such as a benzyl sulfide group, a phenylethyl sulfide group, and a phenylpropyl sulfide group; and aryl sulfide groups such as a phenyl sulfide group, a tolyl sulfide group, a dimethylphenyl sulfide group, a trimethylphenyl sulfide group, an ethylphenyl sulfide group, a propylphenyl sulfide group, a biphenyl sulfide group, a naphthyl sulfide group, a methylnaphthyl sulfide group, an anthracenyl sulfide group, and a phenanthryl sulfide group.

Examples of the acyl group having 1 to 20 carbon atoms include alkylacyl groups such as a formyl group, an acetyl group, a propionyl group, a butyryl group, a valeryl group, a palmitoyl group, a stearoyl group, and an oleoyl group; arylacyl groups such as a benzoyl group, a toluoyl group, a saticyloyl group, a cinnamoyl group, a naphthoyl group, and a phthaloyl group; an oxalyl group, a malonyl group, and a succinyl group respectively derived from oxalic acid, malonic acid, and succinic acid (dicarboxylic acid); and the like.

Y is a Lewis base. A plurality of Y may be either identical or different when a plurality of Y are present Y may be crosslinked with another Y, E, or X. Specific examples of the Lewis base represented by Y include amines, ethers, phosphines, thioethers and the like.
Examples of the amines include amines having 1 to 20 carbon atoms. Specific examples of the amines include alkylamines such as methylamine, ethylamine, propylamine, butylamine, cyclohexylamine, methylethylamine, dimethylamine, diethylamine, dipropylamine, dibutylamine, dicyclohexylamine, and methylethylamine; alkenylamines such as vinylamine, propenylamine, cylohexenylamine, divinylemine, dipropenylamine, and dicyclohexenylamine; arylalkylamines such as phenylmethylamine, phenylethylamine, and phenylpropylamine; and arylamines such as diphenylamine and dinaphthylamine.

Examples of the ethers include aliphatic simple ether compounds such as methyl ether, ethyl ether, propyl ether, isopropyl ether, butyl ether, isobutyl ether, n-amyl ether, and isoamyl ether, aliphatic mixed ether compounds such as methyl ethyl ether, methyl propyl ether, methyl isopropyl ether, methyl n-amyl ether, methyl isoamyl ether, ethyl propyl ether, ethyl isopropyl ether, ethyl butyl ether, ethyl isobutyl ether, ethyl n-amyl ether, and ethyl isoamyl ether; aliphatic unsaturated ether compounds such as vinyl ether, allyl ether, methyl vinyl ether, methyl allyl ether, ethyl vinyl ether, and ethyl allyl ether; aromatic ether compounds such as anisole, phenetole, phenyl ether, benzyl ether, phenyl benzyl ether, α-naphthyl ether, and β-naphthyl ether; and cyclic ether compounds such as ethylene oxide, propylene oxide, trimethylene oxide, tetrahydrofuran, tetrahydropyran, and dioxane.

Examples of the phosphines include phosphines having 1 to 20 carbon atoms. Specific examples of the phosphines include hydrocarbon-monosubstituted phosphines such as methylphosphine, ethylphosphine, propylphosphine, butylphosphine, hexylphosphine, cyclohexylphosphine, and octylphosphine; hydrocarbon-disubstituted phosphines such as dimethylphosphine, diethylphosphine, dipropylphosphine, dibutylphosphine, dihexylphosphine, dicyclohexylphosphine, and dioctylphosphine; hydrocarbon-trisubstituted phosphines such as trimethylphosphine, triethylphosphine, tripropylphosphine, tributylphosphine, trihexylphosphine, tricyclohexylphosphine, and trioctylphosphine; monoalkenylphosphines such as vinylphosphine, propenylphosphine, and cyclohexenylphosphine; dialkenylphosphines obtained by substituting two hydrogen atoms of phosphines with an alkenyl group; trialkenylphosphines obtained by substituting three hydrogen atoms of phosphines with an alkenyl group; arylalkylphosphines such as benzylphosphine, phenylethylphosphine, and phenylpropylphosphine; diarylalkylphosphines and aryldialkylphosphines obtained by substituting three hydrogen atoms of phosphines with an aryl group and an alkenyl group; phenylphosphine; tolylphosphine; dimethylphenylphosphine; trimethylphenylphosphine; ethylphenylphosphine; propylphenylphosphine; biphenylphosphine; naphthylphosphine; methylnaphthylphosphine; anthracenylphosphine; phenanthrylphosphine; di(alkylaryl)phosphines obtained by substituting two hydrogen atoms of phosphines with an alkylaryl group; tri(alkylaryl)phosphines obtained by substituting three hydrogen atoms of phosphines with an alkylaryl group; and the like.
Examples of the thioethers include the sulfides mentioned above In connection with X.

A¹ and A² are respectively a bridging group represented by the following formula (IIa) and a bridging group represented by the following formula (IIb), provided that A¹ and A² are different groups.

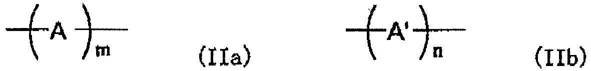

wherein A and A' are Independently groups selected from a hydrocarbon group having 1 to 20 carbon atoms, a halogen-containing hydrocarbon group having 1 to 20 carbon atoms, a silicon-containing group, a germanium-containing group, and a tin-containing group, and m and n are integers equal to or larger than 2.

It is preferable that A and A' In the formulas (IIa) and (IIIa) be respectively a group represented by the following formula (IIIa) and a group represented by the following formula (IIIb). 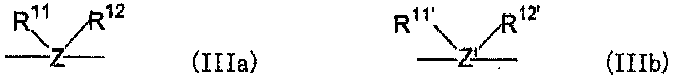 wherein Z and Z' are independently a carbon atom, a silicon atom, a germanium atom, or a tin atom, and R¹¹, R¹², R^{11'}, and R^{12'} are independently a hydrogen atom, an aliphatic hydrocarbon group, an aromatic hydrocarbon group, a nitrogen-containing group, a silicon-containing group, or a halogen-containing group.

Examples of the aliphatic hydrocarbon group in the formulas (IIIa) and (IIIb) include the alkyl groups and the like mentioned above in connection with X in the formula (I).
Examples of the aromatic hydrocarbon group include the aryl groups and the like mentioned above in connection with X In the formula (I).
Examples of the nitrogen-containing group include the amide groups having 1 to 20 carbon atoms and the like mentioned above in connection with X in the formula (I).
Examples of the silicon-containing group include the silicon-containing groups having 1 to 20 carbon atoms and the like mentioned above in connection with X in the formula (I).
Examples of the halogen-containing group Include groups obtained by substituting these groups with a halogen atom.
R¹¹, R¹², R^{11'}, and R^{12'} are preferably a hydrogen atom, a methyl group, an ethyl group, a cyclohexyl group, or a trimethylsilyl group.

Specific examples of the bridging groups A¹ and A² include an ethylene group, a tetramethylethylene group, a tetramethyldisilylene group, a tetramethyldigermirene group, and the like. Among these, an ethylene group and a tetramethyldisilylene group are preferable since the polymerization activity increases.

m and n are independently integers equal to or larger than 2, preferably integers from 2 to 5, and more preferably 2 or 3. q is an integer from 1 to 5 that indicates "(valence of M) - 2", and r is an integer from 0 to 3.

E are groups represented by the following formula (IIc), and may be either identical or different.

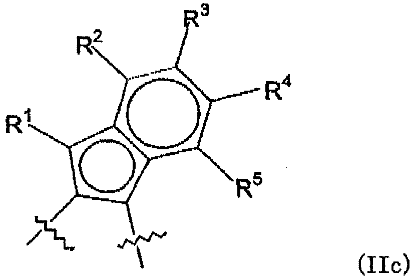

wherein R¹ to R⁵ are independently a hydrogen atom, a halogen atom, a hydrocarbon group having 1 to 20 carbon atoms, a halogen-containing hydrocarbon group having 1 to 4 carbon atoms, a silicon-containing group, or a heteroatom-containing group, provided that the wavy line indicates that the bridging group A¹ or A² is bonded.
E form a crosslinked structure via A¹ and A².

Specific examples of the halogen atom, the hydrocarbon group having 1 to 20 carbon atoms, and the silicon-containing group represented by R¹ to R⁵ in the formula (IIc) include those mentioned above in connection with X.
Examples of the halogen-containing hydrocarbon group having 1 to 4 carbon atoms include a chloromethyl group, a 2-chloroethyl group, a fluoromethyl group, a 2-fluoroethyl group, a 4-fluorobutyl group, and the like.
Examples of the heteroatom-containing group include a methoxy group, an ethoxy group, a butoxy group, an amino group, a dimethylamino group, an aminoethyl group, a methylthio group, and the like.

A transition metal compound represented by the following formula (IV) is preferable as the transition metal compound represented by the formula (I).

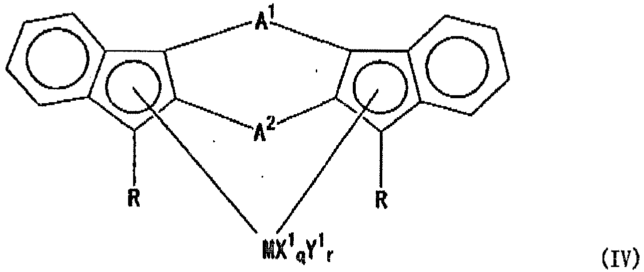

The above compound has a meso structure in which the indene rings that form the basic skeleton have a 1,1'-crosslinked structure and a 2,2'-crosslinked structure.

M, A¹, A², q, and r in the formula (IV) are the same as defined above in connection with the formula (I). X¹ is a σ-bonding ligand. A plurality of X¹ may be either identical or different when a plurality of X¹ are present. X¹ may be crosslinked with another X¹ or Y¹. Specific examples of the σ-bonding ligand represented by X¹ Include those mentioned above in connection with X in the formula (I). Y¹ is a Lewis base. A plurality of Y¹ may be either identical or different when a plurality of Y¹ are present. Y¹ may be crosslinked with another Y¹ or X¹. Specific examples of the Lewis base represented by Y¹ include those mentioned above In connection with Y in the formula (I).

R are Independently a hydrogen atom, a halogen atom, a hydrocarbon group having 1 to 20 carbon atoms, a halogen-containing hydrocarbon group having 1 to 20 carbon atoms, a silicon-containing group, or a heteroatom-containing group. R may be either identical or different.

Specific examples of the transition metal compound represented by the formula (I) include (1,1'-ethylene)(2,2'-tetramethyldisilylene)-bis(indenyl)zirconium dichloride, (1,1'-tetramethyldisilylene)(2,2'-ethylene)-bis(indenyl)zirconium dichloride, (1,1'-tetramethylethylene)(2,2'-tetramethyldisilylene)-bis(indenyl)zirconium dichloride, (1,1'-tetramethyldisilylene)(2,2'-tetramethylethylene)-bis(indenyl)zirconium dichloride, (1,1'-dimethylsilylenemethylene)(2,2'-ethylene)-bis(3-methylindenyl)zirconium dichloride, (1,1'-ethylene)(2,2'-imethylsilylenemethylene)-bis(3-methylindenyl)zirconium dichloride, (1,1'-ethylene)(2,2'-tetramethyldigermirene)-bis(indenyl)zirconium dichloride, (1,1'-tetramethyldigermirene)(2,2'-ethylene)-bis(indenyl)zirconium dichloride,

(1,1'-ethylene)(2,2'-tetramethyldisilylene)-bis(3-methylindenyl)zirconium dichloride, (1,1'-tetramethyldisilylene)(2,2'-ethylene)-bis(3-methylindenyl)zirconium dichloride, (1,1'-tetramethylethylene)(2,2'-tetramethyldisilylene)-bis(3-methylindenyl)zirconium dichloride, (1,1'-tetramethyldisilylene)(2,2'-tetramethylethylene)-bis(3-methylindenyl)zirconium dichloride, (1,1'-dimethylsilylenemethylene)(2,2'-ethylene)-bis(3-methylindenyl)zirconium dichloride, (1,1'-ethylene)(2,2'-dimethylsilylenemethylene)-bis(3-methylindenyl)zirconium dichloride, (1,1'-ethylene)(2,2'-tetramethyldigermirene)-bis(3-methylindenyl)zirconium dichloride, (1,1'-tetramethyldigermirene)(2,2'-ethylene)-bis(3-methylindenyl)zirconium dichloride, compounds obtained by substituting zirconium of these compounds with titanium or hafnium, and the like. Note that the transition metal compound represented by the formula (I) is not limited to these compounds. The transition metal compound represented by the formula (I) may be a similar compound of a metal element in another group, or a lanthanoid series element.

The transition metal compound according to the invention may be synthesized using a known metallocene catalyst synthesis method. For example, the transition metal compound according to the invention may be synthesized using a synthesis method disclosed In JP-A-2002-308893, or the synthesis method used in the examples.

An olefin polymerization catalyst is obtained by utilizing (A) the transition metal compound according to the invention (hereinafter may be referred to as "component (A)") together with (B) at least one compound selected from (B-1) a compound that can react with the transition metal compound (A) or a derivative thereof to form an ionic complex, and (B-2) an aluminoxane, and (C) an organoaluminum compound.

An arbitrary compound may be used as the component (B-1) as long as the compound can react with the transition metal compound (A) to form an ionic complex. A compound represented by the following formula (V) or (VI) may preferably be used as the component (B-1).

([L¹-R¹³]^{k+})ₐ([Z]⁻)_{b} (V)

([L²]^{k+})ₐ([Z])_{b} (VI)

wherein L² is M², R¹⁴R¹⁶M³, R¹⁶₃C, or R¹⁷M³.

In the formulas (V) and (VI), L¹ is a Lewis base, and [Z]⁻ is a non-coordinating anion [Z¹]⁻ or [Z²]⁻. [Z¹]⁻ is an anion in which a plurality of groups are bonded to an element, and is represented by [M¹G¹G²...G¹]⁻ (wherein M¹ is an element among the elements in Groups 5 to 15 in the periodic table (preferably an element among the elements In Groups 13 to 15 in the periodic table), G¹ to G' are independently a hydrogen atom, a halogen atom, an alkyl group having 1 to 20 carbon atoms, a dialkylamino group having 2 to 40 carbon atoms, an alkoxy group having 1 to 20 carbon atoms, an aryl group having 6 to 20 carbon atoms, an aryloxy group having 6 to 20 carbon atoms, an alkylaryl group having 7 to 40 carbon atoms, an arylalkyl group having 7 to 40 carbon atoms, a halogen-substituted hydrocarbon group having 1 to 20 carbon atoms, an acyloxy group having 1 to 20 carbon atoms, an organic metalloid group, or a heteroatom-containing hydrocarbon group having 2 to 20 carbon atoms, provided that two or more of G¹ to G' may bond to each other to form a ring, and f is an integer equal to "(valence of center metal M') + 1"). [Z²]⁻ is a conjugated base of a Brönsted acid for which the logarithm of the reciprocal of the acid dissociation constant (pKa) is -10 or less, a conjugated base of a combination of the Brönsted acid and a Lewis acid, or a conjugated base of an acid that is normally defined as a superacid. Note that a Lewis base may be coordinated thereto.
R¹³ is a hydrogen atom, an alkyl group having 1 to 20 carbon atoms, an aryl group having 6 to 20 carbon atoms, an alkylaryl group, or an arylalkyl group.
R¹⁴ and R¹⁵ are independently a cyclopentadienyl group, a substituted cyclopentadienyl group, an indenyl group, or a fluorenyl group, and R¹⁶ is an alkyl group having 1 to 20 carbon atoms, an aryl group, an alkylaryl group, or an arylalkyl group.
R¹⁷ is a macrocyclic ligand such as tetraphenylporphyrin or phthalocyanine.
k is the ionic valence of [L¹-R¹³] and [L²], and is an integer from 1 to 3, a is an integer equal to or larger than 1, and b is (k×a). M² is an element among the elements in Groups 1 to 3, 11 to 13, and 17 In the periodic table, and M³ is an element among the elements in Groups 7 to 12 in the periodic table.

Specific examples of the Lewis base represented by L¹ include ammonia, amines such as methylamine, aniline, dimethylamine, diethylamine, N-methylaniline, diphenylamine, N,N-dimethylaniline, trimethylamine, triethylamine, tri-n-butylamine, methyldiphenylamine, pyridine, p-bromo-N,N-dimethylaniline, and p-nitro-N,N-dimethylaniline, phosphines such as triethylphosphine, triphenylphosphine, and diphenylphosphine, thioethers such as tetrahydrothiophene, esters such as ethyl benzoate, nitrites such as acetonitrile and benzonitrile, and the like.

Specific examples of the atom or the group represented by R¹³ include a hydrogen atom, a methyl group, an ethyl group, a benzyl group, a trityl group, and the like. Specific examples of the groups represented by R¹⁴ and R¹⁵ include a cyclopentadienyl group, a methylcyclopentadienyl group, an ethylcyclopentadienyl group, a pentamethylcyclopentadienyl group, and the like.
Specific examples of the group represented by R¹⁶ include a phenyl group, a p-tolyl group, a p-methoxyphenyl group, and the like. Specific examples of the ligand represented by R¹⁷ include tetraphenylporphyrin, phthalocyanine, allyl, methallyl, and the like.

Specific examples of the element represented by M² include Li, Na, K, Ag, Cu, Br, I, I₃, and the like. Specific examples of the element represented by M³ include Mn, Fe, Co, Ni, Zn, and the like.
Specific examples of the element represented by M¹ in [Z¹]⁻ (i.e., [M¹G¹G²...G^{l}]) include B, Al, Si, P, As, Sb, and the like. Among these, B and Al are preferable.
Specific examples of the atom or the group represented by G¹, G² to G' include dialkylamino groups such as a dimethylamino group and a diethylamino group, alkoxy groups and aryloxy groups such as a methoxy group, an ethoxy group, an n-butoxy group, and a phenoxy group, hydrocarbon groups such as a methyl group, an ethyl group, an n-propyl group, an isopropyl group, an n-butyl group, an isobutyl group, an n-octyl group, an n-eicosyl group, a phenyl group, a p-tolyl group, a benzyl group, a 4-t-butylphenyl group, and a 3,5-dimethylphenyl group, halogen atoms such as a fluorine atom, a chlorine atom, a bromine atom, and an iodine atom, heteroatom-containing hydrocarbon groups such as a p-fluorophenyl group, a 3,5-difluorophenyl group, a pentaohlorophenyl group, a 3,4,5-trifluorophenyl group, a pentafluorophenyl group, a 3,5-bis(trifluoromethyl)phenyl group, and a bis(trimethylsilyl)methyl group, and organic metalloid groups such as a pentamethylantimony group, a trimethylsilyl group, a trimethylgermyl group, a diphenylarsine group, a dicyclohexylantimony group, and a diphenylboron group.

Specific examples of the non-coordinating anion [Z²]⁻ (i.e., a conjugated base of a Brönsted acid having a pKa of -10 or less, or a conjugated base of a combination of the Brönsted acid and a Lewis acid) include a trifluoromethanesulfonic acid anion (CF₃SO₃)⁻, a bis(trifluoromethanesulfonyl)methyl anion, a bis(trifluoromethanesulfonyl)benzyl anion, bis(trifluoromethanesulfonyl)amide, a perchloric acid anion (ClO₄)⁻, a trifluoroacetic acid anion (CF₃CO₂)⁻, a hexafluoroantimony anion (SbF₆)⁻, a fluorosulfonic acid anion (FSO₃)⁻, a chlorosulfonic acid anion (CISO₃)⁻, fluorosulfonic acid anion/antimony pentafluoride (FSO₃/SbF₆)⁻, fluorosulfonic acid anion/arsenic pentafluoride (FSO₃/AsF₅)⁻, trifluoromethanesulfonic acid anion/antimony pentafluoride (CF₃SO₃/SbF₅)⁻, and the like.

Specific examples of the compound (B-1) (i.e., an ionic compound that reacts with the transition metal compound according to the invention (component (A)) to form an ionic complex) include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benxylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methy)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate. methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoborate, silver hexafluorophosphate, silver hexafluoroarsenate, silver perchlorate, silver trifluoroacetate, silver trifluoromethanesulfonate, and the like.

These compounds (B-1) may be used either alone or in combination.

Examples of the aluminoxane (B-2) include a chain-like aluminoxane represented by the following formula (VII) and a cyclic aluminoxane represented by the following formula (VIII). 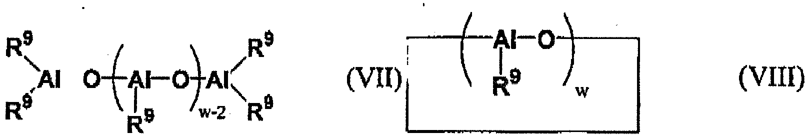 wherein R⁹ is a hydrocarbon group (e.g., alkyl group having 1 to 20 carbon atoms (preferably 1 to 12 carbon atoms), alkenyl group, aryl group, or arylalkyl group) or a halogen atom, and w indicates an average degree of polymerization, and is an Integer which is normally from 2 to 50 (preferably 2 to 40), provided that a plurality of R⁹ may be either identical or different

The aluminoxane may be produced by bringing an alkylaluminum into contact with a condensing agent (e.g., water). The reaction may be carried out in accordance with a known method.

For example, (1) an organoaluminum compound may be dissolved in an organic solvent, and the solution may be brought into contact with water, (2) an organoaluminum compound may be added during polymerization, followed by the addition of water, (3) crystallization water contained in a metal salt or the like, or water adsorbed by an inorganic substance and an organic substance may be reacted with an organoaluminum compound, or (4) a trialkylaluminum may be reacted with a tetrealkyldialuminoxane, and the reaction product may be reacted with water. The aluminoxane may be insoluble in toluene. These aluminoxanes may be used either alone or in combination.

When using the compound (B-1) as the component (B), the transition metal compound (A) and the compound (B-1) are preferably used in a molar ratio ((A):(B-1)) of 10:1.to 1:100, and more preferably 2:1 to 1:10. If the molar ratio is outside the above range, the catalyst cost per unit mass of the polymer may increase and may not be practical.
When using the aluminoxane (B-2) as the component (B), the transition metal compound (A) and the aluminoxane (B-2) are preferably used in a molar ratio ((A):(B-2)) of 1:1 to 1:1,000,000, and more preferably 1:10 to 1:10,000. If the molar ratio is outside the above range, the catalyst cost per unit mass of the polymer may increase and may not be practical.
Note that only one type of the compound (B-1) and/or only one type of the aluminoxane (B-2) may be used as the component (B), or two or more types of the compound (B-1) and/or the aluminoxane (B-2) may be used as the component (B).

A compound represented by the following formula (IX) is used as the organoaluminum compound (C).

R¹⁰ᵥAIJ₃₋ᵥ (IX)

wherein R¹⁰ is an alkyl group having 1 to 10 carbon atoms, J is a hydrogen atom, an alkoxy group having 1 to 20 carbon atoms, an aryl group having 6 to 20 carbon atoms, or a halogen atom, and v is an integer from 1 to 3.

Specific examples of the compound represented by the formula (IX) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride, and the like. Among these, it is preferable to use an organoaluminum compound to which a hydrocarbon group having 4 or more carbon atoms (preferably 4 to 8 carbon atoms) Is bonded, due to excellent high-temperature stability. When employing a reaction temperature of 100°C or more, it is more preferable to use an organoaluminum compound to which a hydrocarbon group having 6 to 8 carbon atoms is bonded. These organoaluminum compounds may be used either alone or in combination.

The component (A) and the component (C) are preferably used In a molar ratio ((A):(C)) of 1:1 to 1:10,000, more preferably 1:5 to 1:2,000, and still more preferably 1:10 to 1:1,000. The polymerization activity per the transition metal can be improved by utilizing the component (C). If the amount of the component (C) is too large, the organoaluminum compound (C) may be wasted, or a decrease in activity may occur, or a large amount of the organoaluminum compound (C) may remain in the α-olefin polymer.

The polymerizatlon catalyst according to the invention may be used in a state in which at least one catalyst component is supported on an appropriate carrier. The carrier is not particularly limited. An inorganic oxide carrier, an inorganic carrier other than the inorganic oxide carrier, or an organic carrier may be used. It is preferable to use an inorganic oxide carrier or an inorganic carrier other than the inorganic oxide carrier.

Specific examples of the inorganic oxide carrier include SiO₂, Al₂O₃, MgO, ZrO₂. TiO₂, Fe₂O₃, B₂O₃, CaO, ZnO, BaO, ThO₂, and a mixture thereof (e.g., silica-alumina, zeolite, ferrite, and glass fibers). Among these, SiO₂ and Al₂O₃ are preferable. Note that the inorganic oxide carrier may contain a small amount of a carbonate, a nitrate, a sulfate, or the like.
Examples of a carrier other the above carrier include magnesium compounds represented by MgR²¹ₓX¹_{y} (e.g., MgCl₂ and Mg(OC₂H₅)₂), complex salts thereof, and the like.
Note that R²¹ is an alkyl group having 1 to 20 carbon atoms, an alkoxy group having 1 to 20 carbon atoms, or an aryl group having 6 to 20 carbon atoms, X¹ is a halogen atom or an alkyl group having 1 to 20 carbon atoms, x is an integer from 0 to 2, and y is an integer from 0 to 2, provided that "x+y=2" is satisfied. A plurality of R²¹ may be either identical or different when a plurality of R²¹ are present, and a plurality of X¹ may be either identical or different when a plurality of X¹ are present.

Examples of the organic carrier include polymers such as polystyrene, a Styrene-divinylbenzene copolymer, polyethylene, poly(1-butene), a substituted polystyrene, and polyallylate, starch, carbon, and the like.

It Is particularly preferable to use MgCl₂, MgCl(OC₂H₅), Mg(OC₂H₅)₂, SiO₂, Al₂O₃, or the like as the carrier.

The properties of the carrier differ depending on the type and the production method. The average particle size of the carrier is normally 1 to 300 µm, preferably 10 to 200 µm, and more preferably 20 to 100 µm. If the particle size of the carrier is small, the amount of fine powder contained in the polymer may increase. If the particle size of the carrier is large, the amount of coarse particles contained in the polymer may increase, and a decrease of bulk density may occur, or a hopper may be clogged.
The specific surface area of the carrier is normally 1 to 1,000 m²/g, and preferably 50 to 500 m²/g. The pore volume of the carrier is normally 0.1 to 5 cm³/g, and preferably 0.3 to 3 cm³/g.
If the specific surface area or the pore volume is outside the above range, a decrease in catalytic activity may occur. The specific surface area and the pore volume may be calculated from the volume of adsorbed nitrogen gas In accordance with the BET method (see J. Am. Chem. Soc., 60, 309 (1983)), for example.

When using an inorganic oxide carrier as the carrier, it is preferable to fire the inorganic oxide carrier at 150 to 1000°C, and more preferably 200 to 800°C. When using the polymerization catalyst in a state in which at least one catalyst component is supported on the carrier, it is preferable to use the polymerization catalyst in a state in which at least one of the component (A) and the component (B) (more preferably both the component (A) and the component (B)) is supported on the carrier. At least one of the component (A) and the component (B) may be supported on the carrier by an arbitrary method. For example, any of the following methods may be used.
(1) At least one of the component (A) and the component (B) is mixed with the carrier.
(2) The carrier is treated with an organoaluminum compound or a halogen-containing silicon compound, and mixed with at least one of the component (A) and the component (B) in an inert solvent.
(3) The carrier and the component (A) and/or the component (B) are reacted with an organoaluminum compound or a halogen-containing silicon compound.
(4) The component (A) or the component (B) is supported on the carrier, and then mixed with the other of the component (A) and the component (B).
(5) A contact reaction product of the component (A) and the component (B) is mixed with the carrier.
(6) The component (A) and the component (B) are subjected to a contact reaction in the presence of the carrier.
Note that the organoaluminum compound (C) may be added when using the method (4), (5), or (6).
The resulting catalyst may be removed as a solid by evaporating the solvent, and then used for polymerization, or may be used directly for polymerization.

Note that at least one of the component (A) and the component (B) may be supported on the carrier in the polymerization system. For example, at least one of the component (A) and the component (B), the carrier, the optional component (C), and an olefin (e.g., ethylene) may be mixed at normal pressure to 2 MPa (gauge), and subjected to preliminary polymerization at -20 to 200°C for 1 minute to 2 hours to produce catalyst particles.

The mass ratio ((B-1):carrier) of the component (B-1) to the carrier in the polymerization catalyst according to the invention is preferably 1:5 to 1:10,000, and more preferably 1:10 to 1:500, The mass ratio ((B-2):carrier) of the component (B-2) to the carrier in the polymerization catalyst according to the invention is preferably 1:0.5 to 1:1000, and more preferably 1:1 to 1:50.
When using two or more components as the component (B), it is preferable that the mass ratio of each component to the carrier is within the above range.
The mass ratio ((A):carrier) of the component (A) to the carrier in the polymerization catalyst according to the invention is preferably 1:5 to 1:10,000, and more preferably 1:10 to 1:500.
If the mass ratio of the component (B) (component (B-1) or (B-2)) to the carrier, and/or the mass ratio of the component (A) to the carrier is outside the above range, a decrease in activity may occur.

The average particle size of the polymerization catalyst thus prepared is normally 2 to 200 µm, preferably 10 to 150 µm, and particularly preferably 20 to 100 µm. The specific surface area of the polymerization catalyst is normally 20 to 1000 m²/g, and preferably 50 to 500 m²/g. If the average particle size of the polymerization catalyst is less than 2 µm, the amount of fine powder contained in the polymer may increase. If the particle size of the polymerization catalyst exceeds 200 µm, the amount of coarse particles contained in the polymer may increase. If the specific surface area of the polymerization catalyst is less than 20 m²/g, a decrease in activity may occur. If the specific surface area of the polymerization catalyst exceeds 1000 m²/g, the bulk density of the polymer may decrease.

The amount of the transition metals per 100 g of the carrier in the polymerization catalyst according to the invention Is normally 0.05 to 10 g, and preferably 0.1 to 2 g. If the amount of the transition metals is outside the above range, a decrease in activity may occur. It is possible to produce a polymer that has an industrially advantageous high bulk density and an excellent particle size distribution by thus supporting the catalyst component on the carrier.

A method for producing an α-olefin polymer according to the invention includes polymerizing an α-olefin using the polymerization catalyst according to the invention. The polymerization method is not particularly limited. A slurry polymerization method, a gas-phase polymerization method, a bulk polymerization method, a solution polymerization method, a suspension polymerization method, or the like may be appropriately used. It is particularly preferable to use a slurry polymerization method or a solution polymerization method.

The polymerization temperature is normally 0 to 200°C, preferably 20 to 200°C, and particularly preferably 100 to 200°C.
The reaction raw material and the catalyst are preferably used so that the molar ratio (raw material monomer:component (A)) is 1 to 10⁶, and particularly preferably 100 to 10⁶.

The viscosity of the α-olefin polymer can be controlled by controlling the reaction temperature. Note that the viscosity of the α-olefin polymer may be controlled by subjecting a high-viscosity α-olefin polymer synthesized in advance to thermal decomposition and peroxide decomposition.

The polymerization time Is normally 5 minutes to 30 hours, and preferably 15 minutes to 25 hours.
In the method for producing an α-olefin polymer according to the invention, it is preferable to add hydrogen since the polymerization activity is significantly improved. The hydrogen pressure is preferably normal pressure to 10 MPa (gauge), more preferably normal pressure to 5.0 MPa (gauge), and still more preferably normal pressure to 1.0 MPa (gauge). The polymerization activity is improved as the amount of hydrogen increases. However, the effect of improving the polymerization activity may be limited, and large production equipment may be required when the hydrogen pressure exceeds 10 MPa (G).

Examples of a polymerization solvent that may be used include aromatic hydrocarbons such as benzene, toluene, xylene, ethylbenzene, and decalin, alicyclic hydrocarbons such as cyclopentane, cyclohexane, and methylcyclohexane, aliphatic hydrocarbons such as pentane, hexane, heptane, and octane, halogenated hydrocarbons such as chloroform and dichloromethane, and the like. These solvents may be used either alone or in combination. Note that the solvent need not necessarily be used depending on the polymerization method.

The polymerization catalyst may be prepared by effecting preliminary polymerization. Preliminary polymerization may be implemented by bringing a small amount of olefin into contact with the catalyst component. Preliminary polymerization may be appropriately implemented using a known method. The olefin used for preliminary polymerization Is not particularly limited. For example, an α-olefin having 3 to 18 carbon atoms, a mixture thereof, or the like may be used. It is advantageous to use the same olefin as that used for polymerization.
For example, the component (A), the component (B), and an α-olefin having 3 to 18 carbon atoms may be brought into contact with each other to prepare the polymerization catalyst, or the component (A), the component (B), the component (C), and an α-olefin having 3 to 18 carbon atoms may be brought into contact with each other to prepare the polymerization catalyst. The preliminary polymerization temperature is normally -20 to 200°C, preferably -10 to 130°C, and more preferably 0 to 80°C. An aliphatic hydrocarbon, an aromatic hydrocarbon, a monomer, or the like may be used as a solvent during preliminary polymerization. Note that preliminary polymerization may be carried out without using a solvent.
It Is preferable to adjust the preliminary polymerization conditions so that the preliminary polymerization product has a limiting viscosity (η) (measured in decalin at 135°C) of 0.1 dl/g or more, and the amount of the preliminary polymerization product produced per mmol of the transition metal component contained in the catalyst is 1 to 10,000 g, and particularly preferably 10 to 1,000 g.

The properties of the α-olefin polymer may be changed by appropriately selecting the type and the amount of each catalyst component or the polymerization temperature, or effecting polymerization in the presence of hydrogen, for example. Polymerization may be effected In the presence of an inert gas such as nitrogen.

### EXAMPLES

### Transition metal compound

### Example 1

A two-necked flask (500 ml) was charged with magnesium (12 g, 500 mmol) and tetrahydrofuran (30 ml). 1,2-Dibromoethane (0.2 ml) was added dropwise to the mixture to activate the magnesium. After the dropwise addition of a solution prepared by dissolving 2-bromoindene (20 g, 103 mmol) in tetrahydrofuran (150 ml) to the mixture, the mixture was stirred at room temperature for 1 hour. After the dropwise addition of 1,2-dichlorotetramethyldisilane (9.4 ml, 5.1 mmol) at 0°C, the reaction mixture was stirred at room temperature for 1 hour. After evaporating the solvent, the residue was extracted with hexane (150 ml×2) to obtain 1,2-di(1H-inden-2-yl)-1,1,2,2-tetramethyldisilane as a white solid (15.4 g, 44.4 mmol, yield: 86%).
The resulting 1,2-di(1H-inden-2-yl)-1,1,2,2-tetramethyldisilane was dissolved in diethyl ether (100 ml). After the dropwise addition of n-butyllithium (2.6 mol/l, 38 ml, 98 mmol) at 0°C, the mixture was stirred at room temperature for 1 hour. A white powder precipitated by this operation. After removing the supernatant liquid, the solid was washed with hexane (60 ml) to obtain a lithium salt as a white powdery solid (14.6 g, 33.8 mmol, yield: 76%).
The resulting lithium salt was dissolved in tetrahydrofuran (120 ml). After the dropwise addition of 1,2-dibromoethane (2.88 ml, 33.8 mmol) at -30°C, the reaction mixture was stirred at room temperature for 1 hour, and evaporated to dryness. The residue was extracted with hexane (150 ml) to obtain a double-bridging ligand as a colorless oily liquid (14.2 g, 37.9 mmol).
The resulting double-bridging ligand was dissolved in diethyl ether (120 ml). After the dropwise addition of n-butyllithium (2.6 mol/l, 32 ml, 84 mmol) at 0°C, the mixture was stirred at room temperature for 1 hour. A white powder precipitated by this operation. After removing the supernatant liquid, the solid was washed with hexane (70 ml) to obtain a lithium salt of the double-bridging ligand as a white powder (14.0 g, 31 mmol, yield: 81%).

A suspension of zirconium tetrachloride (1.52 g, 6.54 mmol) in toluene (30 ml) was added dropwise to a suspension of the lithium salt of the double-bridging ligand (3.00 g, 6.54 mmol) in toluene (30 ml) at -78°C using a cannula. After stirring the reaction mixture at room temperature for 2 hours, the supernatant liquid was separated, and the residue was extracted with toluene.

The solvent was evaporated from the supernatant liquid and the extract under reduced pressure, and the residue was evaporated to dryness to obtain the transition metal catalyst ((1,1'-ethylene)(2,2'-tetramethyldisilylene)bis(indenyl)zirconium dichloride) represented by the following formula (1) as a yellow solid (2.5 g, 4.7 mmol, yield: 72%).

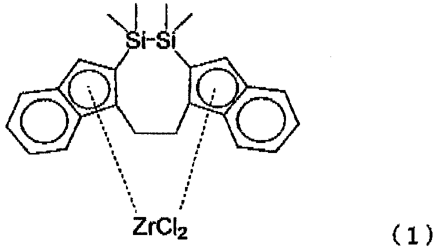

The ¹H-NMR measurement results are shown below. ¹H-NMR (CDCl₃): δ 0.617 (s, 6H, -SiMe₂-), 0.623 (s, 6H, -SiMe₂-), 3,65-3,74, 4,05-4,15 (m, 4H, CH₂CH₂), 6.79 (s, 2H, CpH), 7.0-7.5 (m, 8H, Aromatic-H)

### α-olefin polymer

### Example 2

An autoclave (1 l) that had been dried by heating was charged with 400 ml of 1-decene (C10=), 1 mmol of triisobutylaluminum, 2 mmol of methylaluminoxane, and 2 µmol of (1,1'-ethylene)(2,2'-tetramethyldisilylene)bis(indenyl)zirconium dichloride. After introducing hydrogen (0.05 MPa), the mixture was subjected to polymerization at 50°C for 5 hours.
After completion of polymerization, the reaction product was precipitated using ethanol, and the precipitate was dried by heating under reduced pressure to obtain an α-olefin polymer. Table 1 shows the properties of the resulting polymer measured as described below.

### Example 3

An α-olefin polymer was produced and evaluated in the same manner as in Example 1, except that the mixture was subjected to polymerization at 110°C for 2 hours. The results are shown in Table 1.

### Example 4 ,

An autoclave (1 l) that had been dried by heating was charged with 400 ml of 1-decene (C10=), 1 mmol of triisobutylaluminum, 8 µmol of N,N-dimethylanilinium tetrakis(pentafluorophenyl)borate, and 2 µmol of (1,1'-ethylene)(2,2'-tetremethyldisilylene)bis(indenyl)zirconium dichloride. After introducing hydrogen (0.05 MPa), the mixture was subjected to polymerization at 50°C for 5 hours.
After completion of polymerization, the reaction product was precipitated using ethanol, and the precipitate was dried by heating under reduced pressure to obtain an α-olefin polymer.
Table 1 shows the properties of the resulting polymer measured as described below.

### Example 5

An α-olefin polymer was produced and evaluated in the same manner as in Example 4, except that the mixture was subjected to polymerization at 90°C for 6 hours. The results are shown in Table 1.

### Example 6

An autoclave (1 l) that had been dried by heating was charged with 400 ml of 1-octadecene (C18=), 1 mmol of triisobutylaluminum, 8 µmol of N,N-dimethylanilinium tetrakis(pentafluorophenyl)borate. and 2 µmol of (1,1'-ethylene)(2,2'-tetramethyldisilylene)bis(indenyl)zirconium dichloride. After introducing hydrogen (0.15 MPa), the mixture was subjected to polymerization at 90°C for 1 hour.
After completion of polymerization, the reaction product was precipitated using ethanol, and the precipitate was dried by heating under reduced pressure to obtain an α-olefin polymer. Table 1 shows the properties of the resulting polymer measured as described below.

### Example 7

An autoclave (1 l) that had been dried by heating was charged with 400 ml of a mixture of an α-olefin having 26 carbon atoms and an α-olefin having 28 carbon atoms (C26: 56.9 mass%, C28: 39.4 mass%), 1 mmol of triisobutylaluminum, 8 µmol of N,N-dimethylanilinium tetrakis(pentafluorophenyl)borate, and 2 µmol of (1,1'-ethylene)(2,2'-tetramethyldisilylene)bis(indenyl)zirconium dichloride. After introducing hydrogen (0.15 MPa), the mixture was subjected to polymerization at 110°C for 1 hour.
After completion of polymerization, the reaction product was precipitated using ethanol, and the precipitate was dried by heating under reduced pressure to obtain an α-olefin polymer. Table 1 shows the properties of the resulting polymer measured as described below.

### Example 8

An autoclave (1 l) that had been dried by heating was charged with 400 ml of 1-dodecene (C12=), 1 mmol of triisobutylaluminum, 8 µmol of N,N-dimethylanilinium tetrakis(pentafluorophenyl)borate, and 2 µmol of (1,1'-ethylene)(2,2'-tetramethyldisilylene)bis(indenyl)zirconium dichloride. After introducing hydrogen (0.05 MPa), the mixture was subjected to polymerization at 50°C for 6 hours.
After completion of polymerization, the reaction product was precipitated using ethanol, and the precipitate was dried by heating under reduced pressure to obtain an α-olefin polymer. Table 1 shows the properties of the resulting polymer measured as described below.

### Comparative Example 1

An autoclave (1 l) that had been dried by heating was charged with 400 ml of 1-decene (C10=), 1 mmol of triisobutylaluminum, 2 mmol of methylaluminoxane, and 2 µmol of (1,1'-ethylene)(2,2'-ethylene)bis(indenyl)zirconium dichloride. After introducing hydrogen (0.05 MPa), the mixture was subjected to polymerization at 50°C for 5 hours. After completion of polymerization, the reaction product was precipitated using ethanol, and the precipitate was dried by heating under reduced pressure to obtain an α-olefin polymer. Table 1 shows the properties of the resulting polymer measured as described below.

### Comparative Example 2

An α-olefin polymer was produced and evaluated in the same manner as in Comparative Example 1, except that the mixture was subjected to polymerization at 110°C for 2 hours. The results are shown in Table 1.

### Comparative Example 3

An autoclave (1 l) that had been dried by heating was charged with 400 ml of 1-decene (C10=), 1 mmol of triisobutylaluminum, 2 mmol of methylaluminoxane, and 2 µmol of
(1,1'-isopropylidene)(2,2'-dimethylsilylene)bis(indenyl)zirconium dichloride. After introducing hydrogen (0.05 MPa), the mixture was polymerized at 50°C for 5 hours.
After completion of polymerization, the reaction product was precipitated using ethanol, and the precipitate was dried by heating under reduced pressure to obtain an α-olefin polymer. Table 1 shows the properties of the resulting polymer measured as described below.

### Comparative Example 4

An autoclave (1 l) that had been dried by heating was charged with 400 ml of 1-decene (C10=), 1 mmol of triisobutylaluminum. 8 µmol of N,N-dimethylanilinium tetrakis(pentafluorophenyl)borate, and 2 µmol of (1,1'-isopropylidene)(2,2'-dimethylsilylene)bis(indenyl)zirconium dichloride. After introducing hydrogen (0.05 MPa), the mixture was subjected to polymerization at 50°C for 5 hours. After completion of polymerization, the reaction product was precipitated using ethanol, and the precipitate was dried by heating under reduced pressure to obtain an α-olefin polymer. Table 1 shows the properties of the resulting polymer measured as described below.

| | Example 2 | Example 3 | Example 4 | Example 5 | Example 6 | Example 7 | Example 8 | Compar ative Example 1 | Compar ative Example 2 | Compar ative Example 3 | Compar ative Example 4 |
|---|---|---|---|---|---|---|---|---|---|---|---|
| Catalyst component (A) | A | A | A | A | A | A | A | B | B | C | C |
| Catalyst component (B) | MAO | MAO | B | B | B | B | B | MAO | MAO | MAO | B |
| Number of carbon atoms of raw material monomer | C10 | C10 | C10 | C10 | C18 | C26, 28 | C12 | C10 | C10 | C10 | C10 |
| Polymerization temperature (°C) | 50 | 110 | 50 | 90 | 90 | 110 | 50 | 50 | 110 | 50 | 50 |
| Hydrogen pressure (MPa) | 0.05 | 0.05 | 0.05 | 0.05 | 0.15 | 0.15 | 0.05 | 0.05 | 0.05 | 0.05 | 0.05 |
| Reaction time (h) | 5 | 2 | 5 | 6 | 1 | 4 | 6 | 5 | 2 | 5 | 5 |
| Conversion rate (%) | 83.7 | 92.5 | 72.0 | 81.6 | 83.0 | 76.0 | 85.0 | 93.4 | 74.9 | 50.3 | 54.7 |
| Meso triad fraction [mm: mol%] | 32.5 | 31.5 | 32.5 | 31.2 | 32.0 | 31.0 | 33.1 | 34.5 | 34.8 | 30.6 | 33.9 |
| Kinematic viscosity at 100°C (mm²/s) | 1741 | 1101 | 1370 | 856 | 210 | 200 | 1234 | 79.3 | 69.3 | 150.6 | 99.3 |
| Dimer/trimer content (mass%) | 0.2 | 0.9 | 1.1 | 0.6 | 0.5 | 0.2 | 0.2 | 2.0 | 13.4 | 2.1 | 2.2 |
| Average number of carbon atoms | 10 | 10 | 10 | 10 | 18 | 27 | 12 | 10 | 10 | 10 | 10 |
| Pour point (°C) | -26 | -27 | -33 | -28 | - | - | -31 | -40 | -39 | -37 | -38 |
| Viscosity index | 381 | 354 | 331 | 307 | - | - | 342 | 199 | 193 | 229 | 212 |
| Melt ing point (Tm) (°C) | - | - | - | - | 42 | 77 | - | - | - | - | - |
| Melt ng endothermic amount (ΔH) (J/g) | - | - | - | - | 91 | 113 | - | - | - | - | - |
| Half-width (°C) | - | - | - | - | 5 | 3 | - | - | - | - | - |

| | | | | | | | | | | | |
|---|---|---|---|---|---|---|---|---|---|---|---|
| Catalyst component (A) A: (1,1-Ethylene)(2,2'-Tetramethyldisilylene)bis(indenyl)zirconium dichloride B: (1,1'-Ethylene)(2,2'-Ethylene)bis(indenyl)zirconium dichloride C: (1,1'-isopropylidene)(2,2'-Dimethylsilylene)bis(indenyl)zirconium dichloride Catalyst component (B) MAO: methylaluminoxane B: N,N-dimethylanilinium tetrakis(pentafluorophenyl)borate | | | | | | | | | | | |

The properties of the polymer were measured by the following methods.

### (1) Conversion rate

The conversion rate was evaluated using gas chromatography (GC).
Column: HT-SIMDISTCB (5 m×0.53 mm (diameter), thickness: 0.17 µm)
Column temperature: increased from 50°C (0.1 min) to 430°C (15 min) at a rate of 20°C/min
Inlet (COC) temperature: oven track
Detector (FID) temperature: 440°C
Carrier gas: He
Linear velocity: 40 cm/sec
Mode: constant flow
Injection volume: 0.5 µl

### (2) Meso triad fraction (mm) and terminal structure

The meso triad fraction (mm) and the terminal structure were determined by ¹³C-NMR spectroscopy in accordance with the method described in Macromolecules 24, 2334 (1991) and Polymer, 30, 1350 (1989).

### (3) Dimer/trimer content

0.05 g of the sample was dissolved In 5 ml of toluene, and the dimer/trimer content in the sample was determined by gas chromatography (GC).

### (4) Pour point

The pour point was measured in accordance with JIS K 2269.

### (5) Kinematic viscosity at 100°C and viscosity index

The kinematic viscosity was measured in accordance with JIS K 2283. The viscosity index was calculated from the kinematic viscosity in accordance with JIS K 2283.

### (6) Melting point (Tm), melting endothermic amount (ΔH), and half-width

The melting point (Tm), the melting endothermic amount (ΔH), and the half-width were measured using a differential scanning calorimeter ("DSC-7" manufactured by PerkinElmer). More specifically, 10 mg of the sample was held at -10°C for 5 minutes in a nitrogen atmosphere, and heated to 120°C at a rate of 10°C/min. The top of the peak observed at the highest temperature in the melting endothermic curve was taken as the melting point (Tm), and the melting endothermic amount (ΔH) was calculated from the area of the melting peak obtained by measuring the melting point (Tm).

### INDUSTRIAL APPLICABILITY

The α-olefin polymer according to the invention may be useful as a lubricant base stock, a viscosity index improver, an anti-wear agent, a friction modifier, and an ink/paint/emulsion/toner release agent The α-olefin polymer may also be useful in the fields of a resin modifier, a pressure-sensitive adhesive component, an adhesive component, a lubricant component, an organic-inorganic composite material, a heat storage medium, a fuel oil (e.g., gas oil) modifier, an asphalt modifier, a high-performance wax, a cosmetic preparation (lipstick, pomade, cream, eyebrow pencil, eye shadow, stick pomade, pack, shampoo, and rinse), a medical product (ointment, suppository, emulsion, surgical dressing material, and packing sheet material), stationery (crayon, crayon pastel, pencil, and carbonic paper), burnishing (wood, furniture, leather, automobile, paper, cake, and fibers), a candle, a leather cream, a textile oil agent, a confectionery material, a model material, a sculpture material, a leather finish material, insulating material waxed paper, a musical instrument, graft wax material printing, production of a mold article, a fruit wax coating, grease, a skiing wax, wax printing, a polisher, a car wax, a metalworking fluid, a rubber anti-oxidant, a tire, an adhesive, converted paper, a thermal storage agent, agricultural chemicals, a fertilizer, a polishing agent (metal and stainless steel), an oil lubricant, grease, a release agent, a paint, a dental wax, a stationary application (lens and embedment), and the like.

Although only some exemplary embodiments and/or examples of the invention have been described in detail above, those skilled in the art will readily appreciate that many modifications are possible in the exemplary embodiments and/or examples without materially departing from the novel teachings and advantages of the invention. Accordingly, all such modifications are intended to be included within the scope of the invention.
The documents described in the specification are incorporated herein by reference in their entirety.

## Claims

1. An α-olefin polymer having (A) a tacticity index (meso triad fraction)[mm] of 10 to 50 mol%, (B) a kinematic viscosity at 100°C of 200 to 10,000 mm²/s, (C) a content of a dimer and a trimer is less than 2 mass%, and (D) an average number of carbon atoms of 4 to 30.

2. The α-olefin polymer according to claim 1, the α-olefin polymer being amorphous, and having (E) a pour point of -15°C or less, (F) a viscosity index of 160 or more, and (G) an average number of carbon atoms of 4 to 15.

3. The α-olefin polymer according to claim 1, the α-olefin polymer being crystalline, and having (H) one melting peak at 20 to 100°C when the α-olefin polymer is subjected to measurement of a melting point (Tm) using a differential scanning calorimeter (DSC), a melting endothermic amount (ΔH) calculated from an area of the melting peak being 20 J/g or more, and a half-width being 10°C or less, and (I) an average number of carbon atoms of 16 to 30.

4. A meso transition metal compound represented by a formula (I), 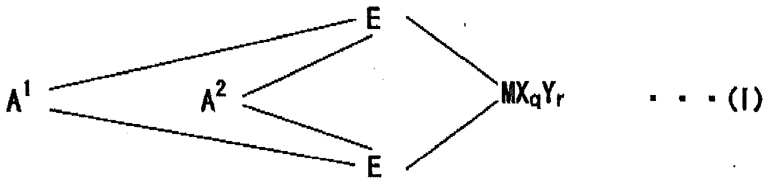 wherein M is a metal element among the elements in Groups 3 to 10 in the periodic table, X is a α-bounding ligand, provided that a plurality of X may be either identical or different when a plurality of X are present, Y is a Lewis base, provided that a plurality of Y may be either identical or different when a plurality of Y are present, A¹ and A² are respectively a bridging group represented by a formula (IIa) and a bridging group represented by a formula (IIb), provided that A¹ and A² are different groups, 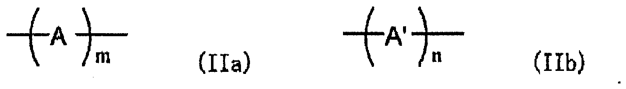 wherein A and A' are independently groups selected from a hydrocarbon group having 1 to 20 carbon atoms, a halogen-containing hydrocarbon group having 1 to 20 carbon atoms, a silicon-containing group, a germanium-containing group, and a tin-containing group, and may be substituted with a substituent, and m and n are integers equal to or larger than 2,
q is an integer from 1 to 5 that indicates "(valence of M) - 2", r is an integer from 0 to 3, and E are groups represented by a formula (IIc), and may be either Identical or different, 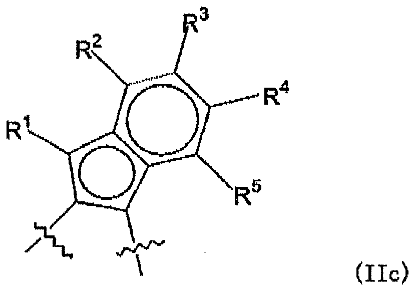 wherein R¹ to R⁵ are independently a hydrogen atom, a halogen atom, a hydrocarbon group having 1 to 20 carbon atoms, a halogen-containing hydrocarbon group having 1 to 4 carbon atoms, a silicon-containing group, or a heteroatom-containing group, provided that a wavy line indicates a bonding with the bridging groups A¹ and A².

5. The transition metal compound according to claim 4, wherein A and A' of the formulas (IIa) and (IIb) are respectively a group represented by a formula (IIIa) and a group represented by a formula (IIIb), 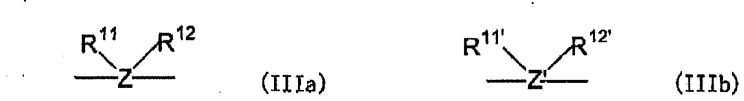 wherein Z and Z' are independently a carbon atom, a silicon atom, a germanium atom, or a tin atom, and R¹¹, R¹², R^{11'}, and R^{12'} are independently a hydrogen atom, an aliphatic hydrocarbon group, an aromatic hydrocarbon group, a nitrogen-containing group, a silicon-containing group, or a halogen-containing group.

6. A polymerization catalyst comprising:
(A) the transition metal compound according to claim 4 or 5;
(B) at least one compound selected from (B-1) a compound that can react with the transition metal compound (A) or a derivative thereof to form an ionic complex, and (B-2) an aluminoxane; and
(C) an organoaluminum compound.

7. The polymerization catalyst according to claim 6, wherein the aluminoxane (B-2) is a compound represented by a formula (VII) or a compound represented by a formula (VIII), 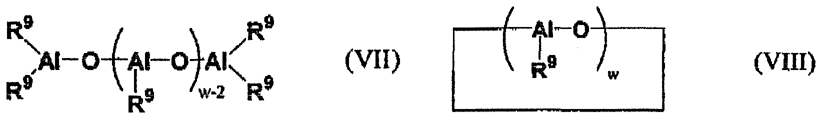 wherein R⁹ is a hydrocarbon group having 1 to 20 carbon atoms or a halogen atom, and w indicates an average degree of polymerization, provided that a plurality of R⁹ may be either identical or different.

8. A method for producing the α-olefin polymer according to claim 1, the method comprising polymerizing an α-olefin using the polymerization catalyst according to claim 6 or 7.

9. The method according to claim 8, wherein a polymerization catalyst obtained by bringing the transition metal compound (A), the compound (B), and the organoaluminum compound (C) into contact with each other in advance is used as the polymerization catalyst

10. The method according to claim 8, wherein a polymerization catalyst obtained by bringing the transition metal compound (A), the compound (B), the organoaluminum compound (C), and an α-olefin having 3 to 18 carbon atoms into contact with each other in advance is used as the polymerization catalyst.

11. The method according to any one of claims 8 to 10, wherein the α-olefin is polymerized at 80 to 200°C.

12. The method according to any one of claims 8 to 11, wherein the α-olefin is polymerized at a hydrogen pressure of normal pressure to 10 MPa (G).

13. The α-olefin polymer according to claim 1, the α-olefin polymer being obtained by the method according to any one of claims 8 to 12.
